Europäisches Patentamt

European Patent Office

Office européen des brevets

(19)

(11) Veröffentlichungsnummer : **0 066 704**
**B1**

(12) **EUROPÄISCHE PATENTSCHRIFT**

(45) Veröffentlichungstag der Patentschrift :
09.01.85

(21) Anmeldenummer : 82103518.5

(22) Anmeldetag : 26.04.82

(51) Int. Cl.⁴ : **F 16 L 25/00, F 16 L 47/00**

(54) **Verbindungsstück zum Einbau in eine fluidführende Leitung, vorzugsweise zwischen ein Kunststoffrohr und ein Metallrohr.**

(30) Priorität : 30.04.81 DK 1920/81

(43) Veröffentlichungstag der Anmeldung :
15.12.82 Patentblatt 82/50

(45) Bekanntmachung des Hinweises auf die Patenterteilung : 09.01.85 Patentblatt 85/02

(84) Benannte Vertragsstaaten :
**BE DE FR NL SE**

(56) Entgegenhaltungen :
**DE-A- 2 250 433**
**DE-A- 2 600 073**
**DE-B- 2 626 302**
**US-A- 4 058 330**

(73) Patentinhaber : **KARFA METALINDUSTRI A/S**
**25 Transformervej**
**DK-2730 Herlev (DK)**

(72) Erfinder : **Kardel, Willy Theodor**
**verstorben (DK)**

(74) Vertreter : **Patentanwälte Beetz sen. - Beetz jun.**
**Timpe - Siegfried - Schmitt-Fumian**
**Steinsdorfstrasse 10**
**D-8000 München 22 (DE)**

EP 0 066 704 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verbindungsstück für den Einbau in eine fluidführende Leitung, das einen hohlen Metallteil und einen Muffenteil aus Kunststoff umfasst, welcher im Spritzgussverfahren um den Metallteil herum geformt ist, im Bereich einer zylindrischen oder hauptsächlich zylindrischen Kontaktfläche an diesem anliegt und ein über den einen Endabschnitt des Metallteils axial hinausragendes freies Ende aufweist, und wobei der eine Teil des Verbindungsstücks in der Kontaktfläche mit wenigstens einer umlaufenden Rille mit Schwalbenschwanzprofil versehen ist, in die ein komplementärer, umlaufender Vorsprung am anderen Teil eingreift.

Ein derartiges Verbindungsstück kann speziell beim Anschluss einer Zweigleitung eines aus Kunststoffrohren bestehenden Gasversorgungsnetzes an eine Hausinstallation Anwendung finden. Die Kunststoffmuffe des Verbindungsstücks wird in diesem Fall mit der Zweigleitung verschweisst, und der Metallteil bildet den Übergang zur Hausinstallation.

Aus der DE-B-2626 302 ist ein Verbindungsstück dieser Art bekannt, bei dem sich das herausragende Ende des Muffenteils im Inneren des Metallteils über dessen gesamte Länge bi zum entgegengesetzten Ende des Metallteils fortsetzt. Da das Kunststoffmaterial des Muffenteils bei seiner Erstarrung schrumpft, besteht erhebliche Gefahr, dass das Fluid, insbesondere wenn es sich dabei um ein Gas handelt, zwischen der Innenseite des Metallteils und der dieser gegenüberliegenden Oberfläche der Kunststoffmuffe austritt. Im Hinblick auf diese Gefahr wird hierbei vorausgesetzt, dass vor dem Spritzgiessen der Kunststoffmuffe ein oder bevorzugterweise zwei Dichtungsringe in inwendige Aussparungen im Metallteil eingelegt werden. Dadurch verteuert sich die Herstellung des Aggregats erheblich, und der grosse Verbrauch an Kunststoffmaterial trägt ebenfalls zu dieser Verteuerung bei.

Ein der vorliegenden Erfindung gemässes Verbindungsstück ist dadurch gekennzeichnet, dass der genannte Endabschnitt des Metallteils einen kleineren Durchmesser als die zylindrische Kontaktfläche hat und dass in einer ringförmigen Übergangsfläche zwischen der zylindrischen Kontaktfläche und der äusseren Oberfläche des Endabschnitts eine zusätzliche umlaufende Rille mit Schwalbenschwanzprofil im einen Teil des Verbindungsstücks und ein in diese eingreifender, komplementärer, umlaufender Vorsprung am anderen Teil vorgesehen sind.

Es hat sich gezeigt, dass ein derartig ausgebildetes Verbindungsstück maximale Dichtigkeit gegen das Austreten des Fluids mit hoher mechanischer Festigkeit der Verbindung zwischen dem Metall- und dem Kunststoffteil vereint und dass sich gleichzeitig der Herstellungspreis für das Verbindungsstück niedrig halten lässt. Der abgestufte Endabschnitt des Metallteils unterstützt den ihn umschliessenden Teil der Kunststoffmuffe effektiv bei Biegebeanspruchungen, denen das Verbindungsstück bei seiner Montage in der Leitung und/oder im montierten Zustand ausgesetzt werden kann, z. B. als Folge davon, dass sich die eine angeschlossene Zweigleitung umgebenden Erdbodenschichten setzen. Die zusätzliche Kupplung zwischen den Teilen des Verbindungsstücks in der Übergangsfläche zwischen der zylindrischen Kontaktfläche und dem Endabschnitt des Metallteils wirkt einer Minderung des Kontaktdruckes im Bereich der Übergangsfläche — und damit der Gefahr für das Auftreten einer Undichtigkeit im Bereich dieser Fläche — durch Zugbeanspruchungen des wegragenden Endes der Muffe, z. B. infolge einer temperaturbedingten Tendenz einer angeschlossenen Zweigleitung, sich zu verkürzen, effektiv entgegen.

Die effektive Dichtigkeit, die ohne die Anwendung separater Dichtungselemente durch die angegebene Ausbildung der Teile des Verbindungsstücks erreicht wird, beruht darauf, dass Fluid, welches unter der Einwirkung eines inneren Überdruckes dazu imstande sein sollte, die Vorspannung, die infolge des Schrumpfens des Kunststoffmaterials beim Erstarren normalerweise im drucklosen Zustand zwischen den sich gegenüberliegenden Kontaktflächen an den Teilen des Verbindungsstücks besteht, zu überwinden und dadurch bis zu einer Rille und in deren Bodenbereich hinein vorzudringen, die Metallfläche und die Kunststofffläche dann auseinanderpresst. Dadurch bewirkt der Fluiddruck eine Verformung des Kunststoffmaterials, die auf Grund des Querschnittprofils der Rille die sich gegenüberliegenden Metall- und Kunststoffflächen an den Seiten der Rille dichter zusammenpresst und somit einem weiteren Austreten des Druckfluids vorbeugt. Es liegt auf der Hand, dass die Verformung des Kunststoffs und die dadurch bedingte Erhöhung des Kontaktdruckes längs der Rillenseiten mit stärker werdendem Fluiddruck am Boden der Rille zunimmt, so dass die Dichtungswirkung « selbstverstärkend » ist.

Die Schwalbenschwanzrillen wirken in der beschriebenen Weise, ganz gleich ob sie im Metallteil oder in der Kunststoffmuffe ausgebildet sind, und es kann in einigen Fällen auf der Ausbildung des Metallteils und den Abmessungen des Verbindungsstücks beruhen, ob die eine oder die andere Möglichkeit die zweckmässigste ist. Der Metallteil kann z. B. als ein Fitting mit Aussen- oder Innengewinde zum Verschrauben mit einem Metallrohr, als Lötfitting oder als ein integrierter Teil eines Ventils, eines Hahnes oder einer anderen Armatur ausgeführt sein.

Die Erhöhung des Kontaktdrucks an den Seitenflächen einer Schwalbenschwanzrille und damit der selbstverstärkenden Dichtungswirkung, die durch einen gegebenen Fluiddruck am Boden der Rille hervorgerufen wird, nimmt mit zunehmendem Winkel zwischen den Seiten des Rillenprofils zu. Umgekehrt bewirken grössere Werte dieses Winkels eine entsprechende Schwächung des umgebenden Materials, was aus Rücksicht auf die Festigkeit einen grösseren Durchmesser und/oder eine grössere Länge der Kontaktflächen erforderlich machen kann. In der Praxis hat es sich als zweckmässig erwiesen, einen Winkel im Bereich zwischen 25° und 45° zu wählen.

Die Erfindung wird im folgenden unter Bezugnahme auf die etwas schematische Zeichnung näher erklärt. Es zeigt

Figur 1 eine Seitenansicht, teilweise im Axialschmitt, einer ersten Ausführungsform eines erfindungsgemässen Verbindungsstücks, das als Übergangsstück mit diversen Zubehörteilen für den Anschluss eines Gasversorgungsnetzes an eine Hausinstallation wiedergegeben ist,

Figur 2 eine entsprechende Ansicht in kleinerem Massstab, die das eigentliche Übergangsstück in einer geänderten Ausführung darstellt,

Figur 3 in grösserem Massstab einen Ausschnitt von Fig. 1, der dem mit III bezeichneten Bereich entspricht, und

Figur 4 eine Seitenansicht, teilweise im Schnitt, einer dritten Ausführungsform des Verbindungsstücks, bei der der Metallteil einen Teil eines Ventils darstellt.

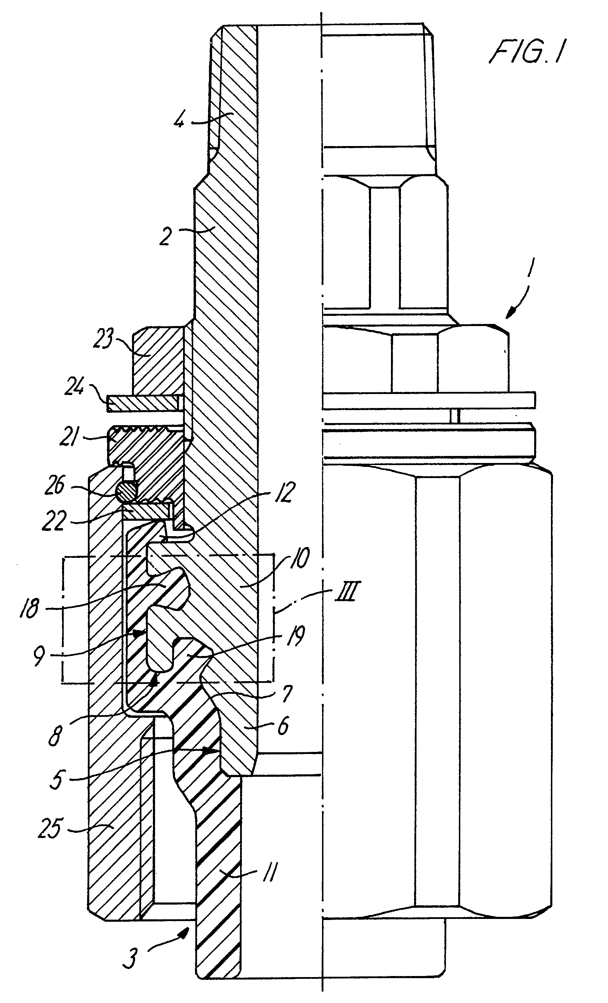

Das in Fig. 1 veranschaulichte erfindungsgemässe Verbindungsstück 1 ist als Übergangsstück zwischen einer nicht wiedergegebenen Kunststoff-Zweigleitung eines Gasversorgungsnetzes und einer ebenfalls nicht wiedergegebenen Hausinstallation mit Metallrohren ausgebildet. Das Übergangsstück besteht aus einem Metallteil 2 und einer damit unlösbar verbundenen Kunststoffmuffe 3, die mit Hilfe eines geeigneten Formwerkzeugs im Spritzgussverfahren um den Metallteil 2 herum geformt ist. Der Metallteil 2 ist als Nippel mit einem Aussengewinde 4 zum Aufschrauben eines zur Hausinstallation gehörenden Rohres ausgebildet.

Die äussere Oberfläche 5 des unteren Endabschnitts 6 des Metallteils geht durch eine Hohlkehle 7 und eine axial orientierte Ringfläche 8 über in die zylindrische Oberfläche 9 einer Erweiterung 10 am Metalltel. Die Kunststoffmuffe 3 hat unten ein freies Ende 11, das axial über den Endabschnitt 6 des Metallteils hinausragt und dessen lichte Weite grösser als die lichte Weite des Abschnitts 6 und kleiner als dessen Aussendurchmesser ist. In das Muffenende 11 kann die oben erwähnte Zweigleitung aus Kunststoff eingeschoben und gasdicht verschweisst werden. Von ihrem freien Ende 11 aus erstreckt sich die Muffe um den Metallteil herum und dicht an dessen Oberfläche anliegend nach oben und endet oben in einem nach innen abgewinkelten Bund 12, der an der oberen ringförmigen Stirnfläche der Erweiterung 10 anliegt.

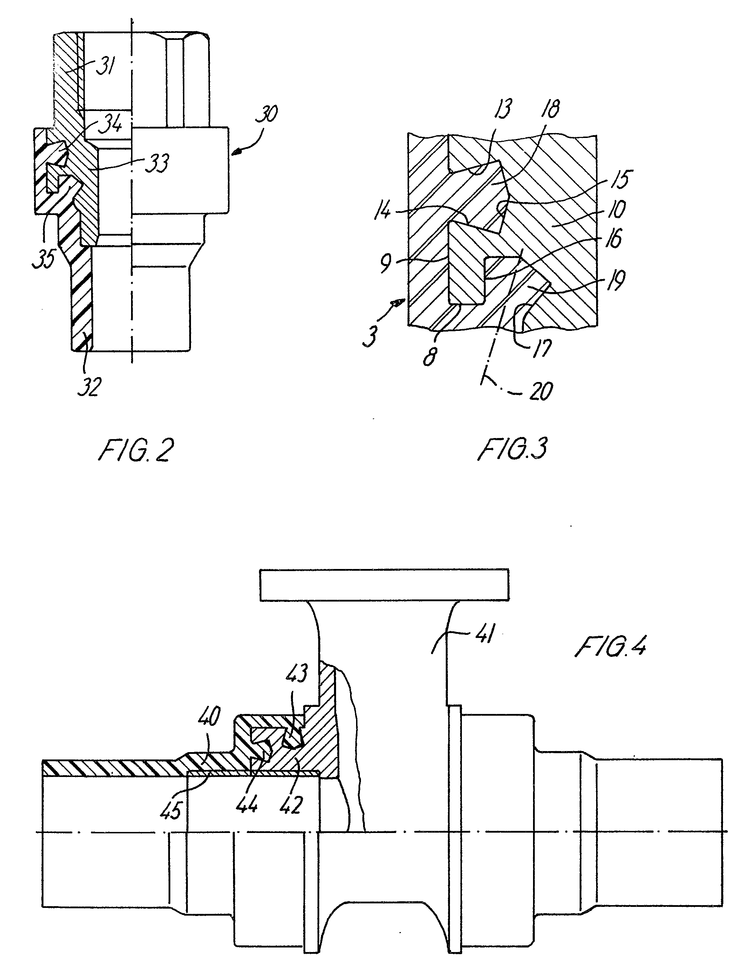

In die zylindrische Oberfläche der Erweiterung 10 des Metallteils ist eine mit der Achse dieses Teils koaxiale, umlaufende Rille eingedreht, die ein Schwalbenschwanzprofil mit zwei nach aussen konvergierenden Seitenflächen 13 und 14 und eine Sohle 15 hat, siehe Fig. 3. Eine ähnliche umlaufende Schwalbenschwanzrille mit nach aussen konvergierenden Seitenflächen 16 und 17 ist in der Hohlkehle 7 zwischen den Flächen 5 und 8 vorgesehen. Beim Spritzgiessen der Muffe 3 um den Metallteil 2 herum werden die beiden Schwalbenschwanzrillen vollständig von dem eingespritzten Kunststoffmaterial in Form von zwei komplementären, umlaufenden Vorsprüngen 18 bzw. 19 auf der Innenseite der Muffe ausgefüllt. Die Anordnung der Rille 16, 17 in der Hohlkehle 7 bewirkt, dass die Mittellinie 20 des Schwalbenschwanzprofils der Rille und des in diese hineinpassenden Vorsprungs 19 mit der Längsachse des Verbindungsstücks einen Winkel bildet. Das Schrumpfen des Kunststoffmaterials bei seinem Erstarren verursacht das Auftreten von Vorspannungskräften zwischen den Seitenflächen 13, 14, 16 und 17 der Rillen und den diesen gegenüberliegenden Seitenflächen der Vorsprünge 18 und 19 zusätzlich zu den Vorspannungskräften, die zwischen den übrigen, aneinander anliegenden Flächen auf der Innenseite der Muffe 3 und der Aussenseite des Metallteils 2 wirksam werden.

Aus den Fig. 1 und 2 ist die oben erläuterte, selbstverstärkende Dichtungsfunktion der Schwalbenschwanzrillen und der in diese eingreifenden Vorsprünge 18 und 19 unmittelbar ersichtlich. Falls ein inwendiger Überdruck des durch die lichte Weite des Übergangsstücks 1 hindurchströmenden Gases ein Vordringen von Gas bis zu der durch die Flächen 16 und 17 abgegrenzten, ersten Rille und an der Fläche 17 entlang weiter bis zur Sohle der Rille verursacht, bewirkt der Gasdruck, dass das Kunststoggmaterial, das den Vorsprung 19 bildet, nach aussen gedrückt wird, und auf Grund des Profils der Rille führt dies zu einem Zusammendrücken des Kunststoffmaterials, das den Kontaktdruck zwischen jeder der Rillenflächen 16 und 17 und der dieser gegenüberliegenden Fläche am Vorsprung 19 erhöht. Dadurch wird ganz offensichtlich der Widerstand gegen ein weiteres Vordringen des austretenden Gases verstärkt. Falls trotzdem Gas am Vorsprung 19 vorbeilecken sollte, verursacht der dadurch entstehende Gasdruck am Boden der nächsten Rille eine entsprechende Verformung des Vorsprungs 18 und verhindert dadurch effektiv eine weitere Leckage von Gas.

Fig. 1 zeigt der Vollständigkeit halber einige zusätzliche Komponenten, die zur Befestigung des Übergangsstücks an einer nicht eingezeichneten Wand dienen, z. B. der Wand eines Reglerschrankes für die Hausinstallation. Diese Teile umfassen eine Scheibe 21 aus isolierendem Material, die mit einer zwischenliegenden Metallscheibe 22 an der Oberseite des Bunds 12 anliegt, eine Mutter 23, die auf ein Aussengewinde am Metallteil 2 aufgeschraubt ist, und eine Unterlegscheibe 24. Mit Hilfe der Mutter 23 wird das Verbindungsstück in einer Öffnung in der nicht eingezeichneten Wand festgespannt, wobei die Scheiben 21 und 24 an je einer Seite der Wand anliegen. Um die Kunststoffmuffe 3 herum ist schliesslich eine Metallverschraubung 25 vorgesehen, die unten ein Innengewinde zum Aufschrauben auf ein nicht gezeigtes Schutzrohr für die Zweigleitung aufweist, die an die Muffe 3 angeschweisst wird, und oben die Metallscheibe 22 mit Hilfe eines Sprengrings 26 gegen den Bund 12 fixiert.

Das in Fig. 2 veranschaulichte Übergangsstück 30 ist in allem wesentlichen in derselben Weise ausgeführt wie das Übergangsstück 1. Es unterscheidet sich von diesem dadurch, dass der Metallteil 31 als Muffe mit Innengewinde ausgebildet ist und dass die Kunststoffmuffe 32 an der Oberseite der Erweiterung 33 des Metallteils ohne einen nach innen abgewinkelten Bund endet. In den sich gegenüberliegenden Kontaktflächen zwischen dem Metallteil und der Kunststoffmuffe sind Schwalbenschwanzrillen bzw. in diese eingreifende, umlaufende Vorsprünge 34 und 35 vorgesehen, deren Ausbildung und Funktion mit den entsprechenden Einzelheiten nach den Fig. 1 und 3 völlig identisch sein können.

Fig. 4 veranschaulicht, wie sich die Erfindung durch direktes Zusammenfügen einer Schweissmuffe 40 aus Kunststoff mit einem aus Metall gefertigten Ventilgehäuse 41 verwirklichen lässt. In die zylindrische Oberfläche und die ringförmige Stirnfläche eines Stutzens 42 am Ventilgehäuse 41 sind Rillen mit schwalbenschwanzförmigen Profil analog mit den in den Fig. 1-3 gezeigten eingedreht, und durch Spritzgiessen der Kunststoffmuffe 40 um den Stutzen 42 herum mit Hilfe eines geeigneten, nicht wiedergegebenen Werkzeugs werden an den inneren, dem Stutzen 42 zugekehrten Kontaktflächen der Muffe zwei umlaufende Vorsprünge 43 und 44 gebildet, ähnlich den Vorsprüngen 18 und 19 in Fig. 1 bzw. 34 und 35 in Fig. 2. Die Funktion der beiden Schwalbenschwanzrillen und der Vorsprünge entspricht der oben beschriebenen. Zum Versteifen der Kunststoffmuffe 40 ist in das Innere des Stutzens ein Stützrohr 45 aus Metall eingesetzt, das funktionell dem Endabschnitt 6 des Metallteils 2 in Fig. 1 entspricht.

**Ansprüche**

1. Verbindungsstück für den Einbau in eine fluidführende Leitung, das einen hohlen Metallteil (2) und einen Muffenteil (3) aus Kunststoff umfasst, welcher im Spritzgussverfahren um den Metallteil herum geformt ist, im Bereich einer zylindrischen oder hauptsächlich zylindrischen Kontaktfläche (9) an diesem anliegt und ein über den einen Endabschnitt (6) des Metallteils axial hinausragendes freies Ende (11) aufweist, und wobei der eine Teil des Verbindungsstücks in der Kontaktfläche (9) mit wenigstens einer umlaufenden Rille (13-15) mit Schwalbenschwanzprofil versehen ist, in die ein komplementärer, umlaufender Vorsprung (18) am anderen Teil eingreift, dadurch gekennzeichnet, dass der genannte Endabschnitt (6) des Metallteils einen kleineren Durchmesser als die zylindrische Kontaktfläche (9) hat und dass in einer ringförmigen Übergangsfläche (7, 8) zwischen der zylindrischen Kontaktfläche (9) und der äusseren Oberfläche (5) des Endabschnitts (6) eine zusätzliche umlaufende Rille (16, 17) mit Schwalbenschwanzprofil im einen Teil des Verbindungsstücks und ein in diese eingreifender, komplementärer, umlaufender Vorsprung (19) am anderen Teil vorgesehen sind.

2. Verbindungsstück nach Anspruch 1, dadurch gekennzeichnet, dass der Innendurchmesser der wegragenden freien Endes (11) des Muffenteils kleiner als der Aussendurchmesser des Endabschnitts (6) des Metallteils, aber grösser als der Innendurchmesser dieses Abschnitts ist.

3. Verbindungsstück nach Anspruch 1 oder 2, dadurch gekennzeichnet, dass die Mittellinie (20) des Schwalbenschwanzprofils in der Übergangsfläche (7, 8) mit der Längsachse des Verbindungsstücks einen Winkel bildet.

4. Verbindungsstück nach einem der Ansprüche 1-3, dadurch gekennzeichnet, dass der Winkel zwischen den konvergierenden Seitenflächen (13, 14 ; 16, 17) der Schwalbenschwanzprofile zwischen 25° und 45° liegt.

**Claims**

1. A joining piece to be fitted into a fluid conducting means ; comprising a hollow metal part (2) and a sleeve part (3) made of a plastics material, said sleeve part being injection moulded around the metal part in tight engagement therewith along a cylindric or substantially cylindric contact surface (9) and having a free end (11) axially protruding beyond one end portion (6) of the metal part, and wherein one part of the joining piece is formed, in the contact surface (9), with at least one circumferential, dovetailed groove (13-15) in which a complementary, circumferential projection (18) provided on the other part engages, characterized in that said end portion (6) of the metal part has a smaller diameter than the cylindric contact surface (9), and that in an annular intermediate surface (7, 8) connecting the cylindric contact surface (9) and the outer surface (5) of the end portion (6) there is formed an additional circumferential, dovetailed groove (16, 17) in one part of the joining piece while on the other part there is provided a complementary, circumferential projection (19) engaging in the additional groove.

2. A joining piece as claimed in claim 1, characterized in that the inner diameter of the protruding free end (11) of the sleeve part is smaller than the outer diameter of the end portion (6) of the metal part, but larger than the inner diameter of that portion.

3. A joining piece as claimed in claim 1 or 2, characterized in that the median line (20) of the dovetail profile in the intermediate surface (7, 8) includes an angle with the longitudinal axis of the joining piece.

4. A joining piece as claimed in any of claims 1-3, characterized in that the angle included between the converging sides (13, 14 ; 16, 17) of the dovetail profiles is between 25° and 45°.

## Revendications

1. Pièce de raccordement destinée à être assemblée dans une conduite de fluide, comprenant une partie métallique creuse (2) et une partie-manchon (3) en matière plastique qui est moulée autour de la partie métallique par un procédé de moulage par injection, est appliquée contre cette dernière dans la région d'une surface de contact (9) cylindrique ou essentiellement cylindrique et présente une extrémité libre (11) qui fait saillie axialement sur l'une des portions terminales (6) de la partie métallique, l'une des parties de la pièce de raccordement comportant, dans la surface de contact (9), au moins une gorge circonférentielle (13-15) profilée en queue d'aronde, dans laquelle s'engage une saillie circonférentielle complémentaire (18) qui est formée sur l'autre partie, caractérisée en ce que ladite portion terminale (6) de la partie métallique a un diamètre plus petit que la surface de contact cylindrique (9) et en ce qu'il est prévu, dans une surface annulaire de transition (7,8) entre la surface de contact cylindrique (9) et la surface extérieure (5) de la portion terminale (6), une gorge circonférentielle supplémentaire (16, 17), profilée en queue d'aronde, dans l'une des parties de la pièce de raccordement et, sur l'autre partie, une saillie circonférentielle de forme complémentaire (19) qui s'engage dans cette gorge.

2. Pièce de raccordement selon la revendication 1, caractérisée en ce que le diamètre intérieur de l'extrémité libre saillante (11) de la partie-manchon est plus petit que le diamètre extérieur de la portion terminale (6) de la partie métallique, mais plus grand que le diamètre intérieur de cette portion.

3. Pièce de raccordement selon la revendication 1 ou 2, caractérisée en ce que l'axe (20) du profil en queue d'aronde prévu dans la surface de transition (7, 8) forme un angle avec l'axe longitudinal de la pièce de raccordement.

4. Pièce de raccordement selon l'une quelconque des revendications 1 à 3, caractérisée en ce que l'angle entre les surfaces latérales convergentes (13, 14 ; 16, 17) des profils en queue d'aronde se situe entre 25° et 45°.

FIG.1

FIG.2

FIG.3

FIG.4